(19) Europäisches Patentamt / European Patent Office / Office européen des brevets

(11) **EP 4 588 692 A1**

(12) **EUROPEAN PATENT APPLICATION**

(43) Date of publication:
**23.07.2025 Bulletin 2025/30**

(21) Application number: **24152607.8**

(22) Date of filing: **18.01.2024**

(51) International Patent Classification (IPC):
**B60C 23/04** (2006.01)

(52) Cooperative Patent Classification (CPC):
**B60C 23/0459; B60C 23/0454; B60C 23/0489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Melexis Technologies SA 2022 Bevaix (CH)**

(72) Inventors:
• **PIERRE, Emeric 2022 Bevaix (CH)**
• **ZAGAN, Ivan 3980 Tessenderlo (BE)**

(74) Representative: **Kay, Ross Marcel Laudens Blackwell House Guildhall Yard London EC2V 5AE (GB)**

(54) **MOTION MEASUREMENT APPARATUS AND METHOD OF MEASURING MOTION OF A WHEEL**

(57) A method of measuring motion of a wheel comprises providing a first acceleration sensor (108) and a second acceleration sensor (110) configured to measure acceleration in respect of a first measurement axis and a second measurement axis. The second measurement axis is substantially orthogonal to the first measurement axis. First accelerations in respect of the first and second measurement axes are measured (204) and then a predetermined period of time is awaited (220) before second accelerations in respect of the first and second measurement axes are made (204). An estimate of change of acceleration is then calculated (206 - 210) by formulaically combining the first and second accelerations measured.

FIG. 3

**Description**

The present invention relates to a motion measurement apparatus of the type that, for example, is fitted to a wheel of a vehicle for measuring motion thereof. The present invention also relates to a method of measuring motion of a wheel, the method being of the type that, for example, measures wheel acceleration.

An aspect of automotive design is the ability to detect motion of a vehicle. The detection of motion of the vehicle is desirable, particularly at lower speeds, for example below 15kph or even from standstill, in order to know when to take certain courses of action in relation to operation of the vehicle, for example making a tyre pressure measurement before the vehicle has left its starting location in order to avoid missing an opportunity to correct any maintenance issues.

It is known to provide a centrifugal acceleration sensor to monitor centrifugal acceleration of one or more wheels of the vehicle. However, performance of such centrifugal acceleration sensors is suboptimal, because at low vehicle speeds, the signal-to-noise ratio of the centrifugal acceleration detection signal generated by the single (per wheel) centrifugal acceleration sensor is poor. This kind of motion detection is therefore only useful at higher vehicular speeds, for example above 25 kph.

This is unhelpful, because at lower vehicular speeds, for example at or below 15 kph, movement of the vehicle cannot be reliably detected. As mentioned above, it is sometimes desirable to detect vehicle motion at lower speeds, because certain operations in relation to the vehicle can be necessary or desirable once the vehicle starts moving.

Another known technique comprises monitoring an acceleration on the centrifugal axis of the centrifugal acceleration sensor in order to detect a phase shift with respect to Earth's gravitational force at different periods of time. However, this technique is inefficient for some applications, because the time taken to measure acceleration is too slow, for example the measurement cannot be made within one revolution of the wheel of the vehicle. Also, the technique is relatively-power hungry, which is an important consideration particularly for so-called Electric Vehicles (EVs)

European patent no. 4 039 509 discloses performing acceleration measurements simultaneously in respect of an x-axis and a z-axis at a given instant in time and comparing the acceleration measurements to respective threshold values to determine a status of the vehicle. However, as indicated above, such measurement techniques exhibit poor SNR at lower vehicular speeds and also consume power inefficiently.

US patent no. 6,259,999 relates to measurement of acceleration in respect of three axes and combines the measurements at a given instant in time. However, the technique discloses consumes power inefficiently and exhibits poor SNR at lower vehicular speeds.

US patent no. 11,441,924 discloses the calculation of filtered acceleration values from a single acceleration sensor and speed of rotation values. The technique calculates the respective sums of the acceleration values and speed values and respectively compares them to a threshold. Again, this technique possesses poor SNR performance at lower vehicular speeds, because when centrifugal acceleration is of the order gravitational acceleration, which is the case at lower vehicular speeds, detection of motion by sensing motion using a single axis acceleration sensor is unreliable owing to the contributions of both centrifugal and gravitational acceleration on the total acceleration seen by the single axis acceleration sensor.

According to a first aspect of the present invention, there is provided a method of measuring motion of a wheel, the method comprising: providing a first acceleration sensor and a second acceleration sensor configured to measure acceleration in respect of a first measurement axis and a second measurement axis, the second measurement axis being in respect of a tangential direction of the wheel and substantially orthogonal to the first measurement axis in respect of a radial direction of the wheel; measuring first accelerations in respect of the first and second measurement axes; waiting a predetermined period of time; measuring second accelerations in respect of the first and second measurement axes; and calculating an estimate of change of acceleration by formulaically combining the first and second accelerations measured.

The method may further comprise: comparing the estimate of change of acceleration with a predetermined threshold value to detect motion of the wheel.

The first and second acceleration sensors may be operably coupled to an acceleration measurement circuit having a power conservation mode; the method may further comprise: placing the acceleration measurement circuit in the power conservation mode during the predetermined period of time.

The method may further comprise: waking the acceleration measurement circuit from the power conservation mode at the end of the predetermined period of time to perform the second acceleration measurements.

The formulaic combination of the first and second accelerations measured may comprise: calculating a first absolute value of a first mathematical difference of the accelerations measured in respect of the first measurement axis and a second absolute value of a second mathematical difference of the accelerations measured in respect of the second measurement axis.

The formulaic combination of the first and second accelerations may further comprise: selecting a maximum value from the first and second absolute values.

The formulaic combination of the first and second accelerations may be: MAX $(|a_x[t=1]-a_x[t=0]|, |a_z[t=1]-a_z[t=0]|)$, where $a_x[t=0]$ and $a_x[t=1]$ may be the acceleration measurements of the first acceleration sensor at respective time indicators t=0 and t=1 separated by the predetermined period of time, and $a_z[t=0]$ and $a_z[t=1]$ may be the acceleration measurements of the second acceleration sensor at the respective time indicators t=0 and t=1.

The formulaic combination of the first and second accelerations may comprise: summing the first and second absolute values.

The formulaic combination of the first and second accelerations may be: $\sum(|a_x[t=1]-a_x[t=0]| \, , \, |a_z[t=1]-a_z[t=0]|)$ where $a_x[t=0]$ and $a_x[t=1]$ may be the acceleration measurements of the first acceleration sensor at respective time indicators t=0 and t=1 separated by the predetermined period of time, and $a_z[t=0]$ and $a_z[t=1]$ may be the acceleration measurements of the second acceleration sensor at the respective time indicators t=0 and t=1.

The method may further comprise: using the comparison of the estimate of change of acceleration with the predetermined threshold value to determine that the wheel is stationary; waiting the predetermined period of time in response to the wheel being determined as stationary; measuring third accelerations in respect of the first and second measurement axes; and calculating another estimate of change of acceleration by formulaically combining the second and third accelerations measured.

The method may further comprise: comparing the another estimate of change of acceleration with the predetermined threshold value to detect motion of the wheel.

The method may further comprise: calculating the predetermined threshold value using at least one of: a radius of the wheel, a placement position of the first and second acceleration sensors on the wheel, a required detection time and/or a power consumption requirement.

The placement position may be on a tire of the wheel or a rim of the wheel.

The method may further comprise: generating a trigger signal in response to detection of motion of the wheel.

A pressure of a tyre of the wheel may be measured in response to the trigger signal. The pressure of the tyre can be communicated to a control unit and analysed. The control unit can be configured to generate a driver warning alert in response to the pressure of the tyre being below a predetermined value.

According to a second aspect of the present invention, there is provided a motion measurement apparatus for a wheel, the apparatus comprising: an acceleration sensor device comprising a first acceleration sensor, a second acceleration sensor and acceleration measurement circuitry operably coupled to the first and second acceleration sensors, the first and second acceleration sensors being configured to measure acceleration in respect of a first measurement axis and a second measurement axis where the second measurement axis is in respect of a tangential direction of the wheel and substantially orthogonal to the first measurement axis in respect of a radial direction of the wheel; wherein the acceleration measurement circuitry is configured to measure, when in use, first accelerations in respect of the first and second measurement axes; the acceleration measurement circuitry is configured to wait a predetermined period of time; the acceleration measurement circuitry is configured to measure second accelerations in respect of the first and second measurement axes; and the acceleration measurement circuitry is configured to calculate an estimate of change of acceleration by formulaically combining the first and second accelerations measured.

It is thus possible to provide a method and apparatus that measures movement of a wheel at speeds below 15kph and even shortly after moving from standstill, for example within one revolution of the wheel, for example part of a revolution of the wheel. The method and apparatus provide improved detection sensitivity owing to the use of orthogonal acceleration sensors that can detect changes in gravitational acceleration in orthogonal axes. The acceleration measurement value possesses a superior signal-to-noise ratio compared to other measurement apparatus and techniques and consumes power more efficiently than other measurement apparatus and techniques.

At least one embodiment of the invention will now be described, by way of example only, with reference to the accompanying drawings, in which:

**Figure 1** is a schematic diagram of a side view of a wheel carrying a motion measurement apparatus therein in an embodiment of the invention;

**Figure 2** is a schematic diagram of the wheel of Figure 1 in cross-section along the line A-A

**Figure 3** is schematic diagram of the motion measurement apparatus of Figures 1 and 2 constituting an embodiment of the invention;

**Figure 4** is a schematic diagram of acceleration measurement circuitry of the motion measurement apparatus of Figure 3 and constituting another embodiment of the invention; and

**Figure 5** is a flow diagram of a method of measuring motion of the wheel in the embodiments of Figures 1, 2, 3 and 4, constituting a further embodiment of the invention.

Throughout the following description, identical reference numerals will be used to identify like parts.

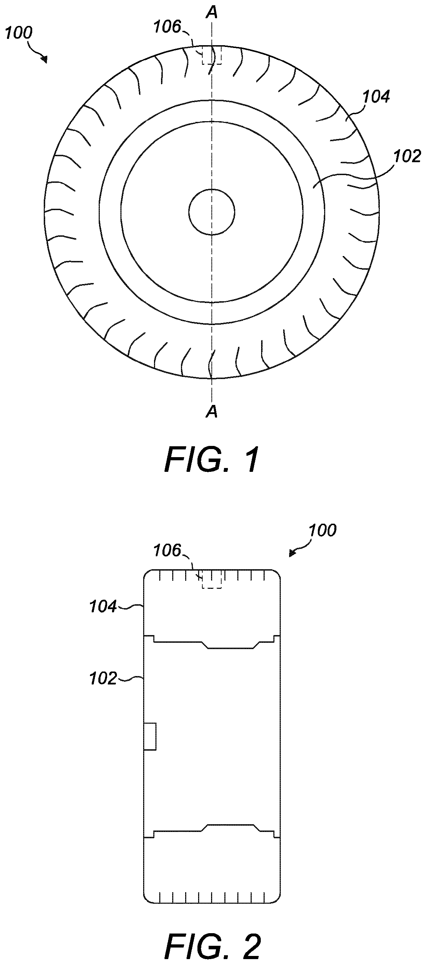

Referring to Figures 1 and 2, a wheel 100 of a vehicle (not shown) comprises a rim 102 and a tyre 104 fitted over the rim 102. The tyre 104 is formed from any suitable rubber polymer, the detail of which is unimportant to understanding the embodiments set forth herein and so will not be described in any further detail.

A motion measurement apparatus 106, for example of a Tyre Pressure Measurement Sensor (TPMS) is, in this example, disposed within the tyre 104, for example adhered to an inner surface of the tyre 104 using any suitable adhesive, in order to measure both centrifugal and tangential accelerations of the wheel 100. In other examples, the acceleration measurement apparatus 106 can be located in or on other parts of the wheel 100, for example on the inside of the rim 102, for example attached to a valve (not shown) of the tyre 104. Although the motion measurement apparatus 106 is described herein as part of a TPMS, the skilled person should appreciate that the motion measurement system 106 can be an independent sensor that is not part of a measurement system.

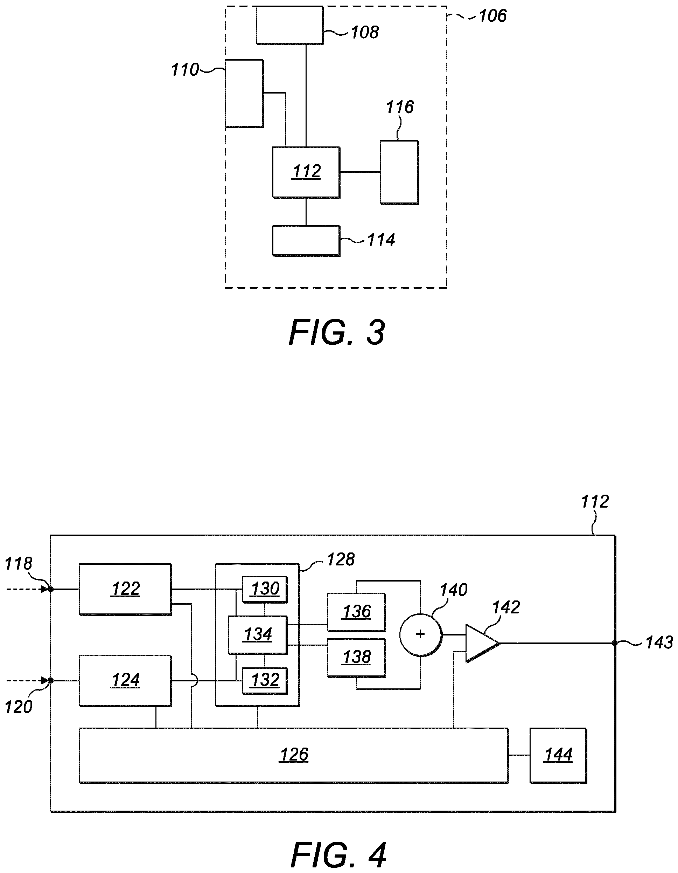

Turning to Figure 3, the motion measurement apparatus 106 is, in this example, a module that comprises a first acceleration sensor 108 and a second acceleration sensor 110 arranged substantially orthogonally with respect to each other in order to measure orthogonal accelerations, for example tangential and centrifugal accelerations. In this example, these axes are x and z axes, respectively, and correspond to a direction tangential to the circumference of the wheel and a radial direction with respect to the wheel.

The first acceleration sensor 108 and the second acceleration sensor 110 are operably coupled to acceleration measurement circuitry 112, the acceleration measurement circuitry 112 being operably coupled to a power source 114 for example a battery, and a communications module 116, for example a RadioFrequency (RF) communications module, such as one conforming to the Bluetooth™ standard. When part of the TPMS, the communications module can be in communication with a Vehicle Control Unit (VCU).

Referring to Figure 4, the acceleration measurement circuitry 112 comprises an x-axis acceleration sensor port 118 and a z-axis acceleration sensor port 120 respectively operably coupled to the first acceleration sensor 108 and the second acceleration sensor 110. The x-axis acceleration sensor port 118 and the z-axis acceleration sensor port 120 are also respectively operably coupled to an x-axis signal reader circuit 122 and a z-axis signal reader circuit 124. The x-axis signal reader circuit 122 and the z-axis signal reader circuit 124 are also respectively operably coupled to a controller circuit 126.

An output of the x-axis signal reader circuit 122 is operably coupled to a first input of a difference calculator circuit 128 and an output of the z-axis signal reader circuit 124 is operably coupled to a second input of the difference calculator circuit 128. The first and second inputs of the difference calculator circuit 128 are respectively operably coupled to a first buffer 130 and a second buffer 132. The first and second buffers 130, 132 and the first and second inputs of the difference calculator circuit 128 are operably coupled to a subtraction circuit 134, the subtraction circuit 134 having a first output and a second output. The first and second buffers 130, 132 serve the purpose of storing respective notional preceding measurement variables $acc\_x_0$, $acc\_z_0$, the application of which will be explained in further detail later herein.

The first and second outputs of the subtraction circuit 134 are operably coupled to inputs of a first absolute value calculation circuit 136 and a second absolute value calculation circuit 138, respectively. Outputs of the first and second absolute value calculation circuits 136, 138 are operably coupled to first and second inputs of a summation circuit 140, an output of the summation circuit 140 being operably coupled to a first input of a comparator circuit 142. A second input of the comparator circuit 142 is operably coupled to the controller circuit 126, the controller circuit 126 also being operably coupled to a memory 144, for example a digital memory, capable of storing a threshold value, $A_E$. An output of the comparator circuit 142 is operably coupled to an output port 143 of the acceleration measurement circuitry 112, the output port of the acceleration measurement circuitry 112 being operably coupled to the communications module 116 as described above in relation to Figure 3.

The acceleration measurement circuitry 112 described above is purely exemplary and can be implemented in a number of different ways, depending upon implementational preferences. In the present example, the blocks and descriptive functions refer to implementation as physical electronic circuits in the analogue domain, but a hybrid implementation is also contemplated, the x- and z-axis signal reader circuits 122, 124 providing analogue to digital conversion of analogue measurement values obtained from the first and second acceleration sensors 108, 110. In this regard, it should be understood that the functions of the blocks described herein is not limited to specific single function circuits, for example a comparator circuit, and other implementations, analogue or digital, are contemplated.

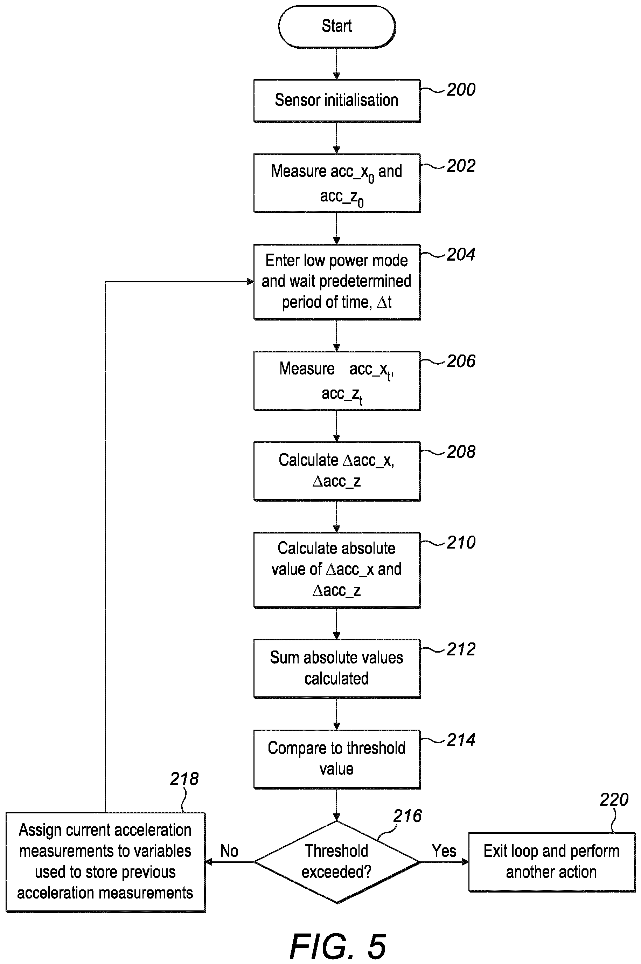

In operation (Figure 5), upon start-up, the controller circuit 126 of the acceleration measurement circuitry 112 initialises (Step 200). In this regard, the controller circuit 126 instructs the x-axis signal reader circuit 122 and the z-axis signal reader circuit 124 to measure (Step 202) an x-acceleration value in respect of the x-axis and a z-acceleration value in respect of the z-axis, which are stored in the first and second buffers 130, 132, respectively. The x acceleration value, $acc\_xt$, and the z acceleration value, $acc\_zt$, are in respect of a current time period t, where t = 0. The measurement process performed by the x- and z-axis signal reader circuits 122, 124 can comprise interrogating the first acceleration sensor 108 and the second acceleration sensor 110, respectively, and obtaining a single reading of acceleration in respect of the x- and z-axes, or in other embodiments the measurement process can comprise signal processing techniques, for example each of the x- and z-axis signal reader circuits 122, 124 can obtain a plurality of readings of acceleration in respect of the x- and z-axes and filter, for example average, each of the plurality of acceleration readings in respect of the x-axis and the plurality of accelerations in respect of the z-axis, thereby obtaining an averaged acceleration value in respect of the x-axis and an averaged acceleration value in respect of the z-axis. The averaged acceleration values can respectively serve as the x-axis acceleration measurement and the z-axis acceleration measurement.

Thereafter, the motion measurement apparatus 106 enters (Step 204) into a power conservation mode, for example a sleep mode, for a predetermined period of time, $\Delta t$, during which the motion measurement apparatus 106 uses minimal power from the power source 114. At the end of the predetermined period of time, $\Delta t$, the acceleration measurement circuitry 112 is woken from the power conservation mode, for example by the controller circuitry 126 and subsequent measurements, $acc\_x_t$, $acc\_zt$, are made (Step 206) in respect of a current but now subsequent time period, where t = 1.

Under the control of the controller circuit 126, the difference calculator circuit 128 receives the x-axis acceleration measurement and the z-axis acceleration measurement and the subtraction circuit 134 calculates (Step 208) difference values in respect of x-axis accelerations and z-axis accelerations. Consequently, in respect of the x-axis, the difference calculator circuit 128 calculates an x-axis difference value between the current measurement of x-axis acceleration (at time indicator t=1) and the preceding measurement of x-axis acceleration immediately preceding the current measurement of x-axis acceleration, which is the measurement in respect of time indicator t=0 stored by the first buffer 130. This can be expressed algebraically as:

$$a_x[t=1]-a_x[t=0] \tag{1}$$

where $a_x[t=1]$ is the current measurement of x-axis acceleration and $a_x[t=0]$ is the preceding measurement of x-axis acceleration. Similarly, in respect of the z-axis, the difference calculator circuit 128 calculates a z-axis difference value between the current measurement of z-axis acceleration (at time indicator t=1) and a preceding measurement of z-axis acceleration immediately preceding the current measurement of z-axis acceleration, which is the measurement in respect of time indicator t=0 stored by the second buffer 132. This can be expressed algebraically as:

$$a_z[t=1]-a_z[t=0] \tag{2}$$

where $a_z[t=1]$ is the current measurement of z-axis acceleration and $a_z[t=0]$ is the preceding measurement of z-axis acceleration.

Controlling the timing of processing, the controller circuit 126 instructs the difference calculator circuit 128 to output the x-axis difference value to the first absolute value calculation circuit 136 and the z-axis difference value to the second absolute value calculation circuit 138. The first and second absolute value calculation circuits 136, 138 then calculate (Step 210) absolute values of the x-axis difference value and the z-axis difference value, respectively. The absolute values of the x-axis difference value and the z-axis difference value are then output to the summation circuit 140, where the summation circuit 140 sums (Step 212) the two absolute values provided, which can be represented algebraically as:

$$\sum(|a_x[t=1]-a_x[t=0]| \, , \, |a_z[t=1]-a_z[t=0]|) \tag{3}$$

where $|a_x[t=1]-a_x[t=0]|$ is the absolute value of the x-axis difference value and $|a_z[t=1]-a_z[t=0]|$ is the absolute value of the z-axis difference value. The sum is an estimate of the change of measured acceleration of the wheel.

Although in this example the absolute values calculated are summed, other mathematical functions can be employed, for example taking the maximum value of the two absolute values calculated by the first and second absolute value calculation circuits 136, 138. This can be expressed algebraically as:

$$\text{MAX}(|a_x[t=1]-a_x[t=0]| \, , \, |a_z[t=1]-a_z[t=0]|) \tag{4}$$

where $|a_x[t=1]-a_x[t=0]|$ is the absolute value of the x-axis difference value and $|a_z[t=1]-a_z[t=0]|$ is the absolute value of the z-axis difference value. The maximum value selected, in this example, is an estimate of the change of measured acceleration of the wheel.

In the present example, though, a summation function is performed and the resultant sum of the two absolute values represents a measure of motion of the wheel (and hence the vehicle to which it is attached), and the resultant sum is compared (Step 214) with the predetermined threshold value, $A_E$, to detect motion, for example of the wheel. The threshold value, $A_\varepsilon$, is retrieved by the controller circuit 126 from the memory 144 and provided to the comparator circuit 142 to be compared (Step 214) with the sum of the two absolute values as described above. The predetermined threshold value, $A_E$,

for estimated change of acceleration can be calculated using any suitable formulation, which can include variables such as a radius of the wheel, a placement position of the first and second acceleration sensors on the wheel, a required detection time and/or a power consumption requirement.

The comparison process performed by the comparator circuit 142 yields a logic 1 or 0 output depending upon whether or not the threshold value, $A_E$, has been exceeded (Step 216) by the sum calculated of the two absolute values. In the event that the threshold value, $A_E$, is determined not to have been exceeded, i.e. motion has not been detected, the subtraction circuit 134 overwrites(Step 218) the data in the first and second buffers 130, 132 in respect of time indicator t=0 and replaces the data in the first and second buffers 130, 132 with the current measurements of x-axis acceleration and z-axis acceleration, respectively, for time indicator t=1. The controller circuit 126 then again places (Step 204) the motion measurement apparatus 106, including the acceleration measurement circuitry 112, into the power conservation or low-power mode for the predetermined period of time, $\Delta t$. At the end of the predetermined period of time, $\Delta t$, the acceleration measurement circuitry 112 is woken from the power conservation mode, for example by the controller circuitry 126 and subsequent measurements are again made in respect of the time indicator variable, t, having a value of unity (Step 206) and the above-described process (Steps 208 to 216) is repeated in respect of a newly acquired measurement of x-axis acceleration (in respect of current measurement point t=1), the preceding measurement of x-axis acceleration (in respect of preceding measurement point t=0) newly stored in the first buffer 130, a newly acquired measurement of z-axis acceleration (in respect of measurement point t=1), and the preceding measurement of z-axis acceleration (in respect of preceding measurement point t=1) newly stored in the second buffer 132.

However, in the event that the threshold value, $A_E$, is determined to have been exceeded, i.e. motion has been detected, the output of the comparator circuit 142 serves as a trigger signal, in this example, which is communicated to the communications module 116 via the output port 143 of the acceleration measurement circuitry 112. In response to the trigger signal, other actions can be performed (Step 216), and indeed if the motion measurement apparatus 106 is part of another apparatus having other measurement capabilities, for example tyre pressure measurement capabilities, the trigger signal can be used to initiate a tyre pressure measurement. However, it should be appreciated that other operations can be performed in response to the trigger signal, for example waking up other integrated circuits and/or sensing of other physical parameters, for example temperature. Where the TPMS is employed, the tyre pressure measurement made can be transmitted using the communication module 116 to the VCU mentioned above. The VCU can then be configured to provide a warning message and/or audible alert to a driver of the vehicle if the tyre pressure is too low.

Whilst in the above examples, the measurements of x-axis acceleration and z-axis acceleration are processed by the acceleration measurement circuitry 112 in order to implement the formulation of equation (3), it should be appreciated that the acceleration measurement circuitry 112 can be configured to implement processing according to other formulaic combinations of the measurements of x-axis and z-axis accelerations, for example in accordance with equation (4) or any other suitable formulaic combination of the acceleration measurements.

Although the predetermined period of time is not waited before estimating a change of acceleration during the initial iteration of the above-described method, the predetermined period of time is awaited in subsequent iterations in order to provide improved power consumption performance. Consequently, it is not essential to wait the predetermined period of time in the first iteration, because it is one of a large number of occasions that the predetermined period of time is waited and the motion measurement apparatus 106 enters the power conservation mode throughout operation of the motion measurement apparatus 106 while the vehicle, for example an electrically-powered vehicle or EV, is powered up.

For additional information, the skilled person will appreciate that the acceleration measurement circuitry 112 described above serves to read the first and second acceleration sensors 108, 110 and perform calculations in respect of the signals read and representing measures of acceleration. The acceleration measurement circuitry 112 can be formed as a dedicated circuit or a programmable circuit, for example a Field Programmable Gate Array (FPGA) or an Application Specific Integrated Circuit (ASIC). In this regard, calculations can be performed by a local low power processor in the digital domain, for example processors employing a Reduced Instruction Set Computer (RISC) architecture, such as an Advanced RISC Machines (ARM) or RISC-V architecture. The logic to reproduce the functionality described can be by way gates combined in any suitable manner to process the signals received and generate an estimate of the acceleration of the wheel.

## Claims

1.  A method of measuring motion of a wheel, the method comprising:

    providing a first acceleration sensor and a second acceleration sensor configured to measure acceleration in respect of a first measurement axis and a second measurement axis, the second measurement axis being in respect of a tangential direction of the wheel and substantially orthogonal to the first measurement axis in respect of a radial direction of the wheel;

measuring first accelerations in respect of the first and second measurement axes;

waiting a predetermined period of time;

measuring second accelerations in respect of the first and second measurement axes; and

calculating an estimate of change of acceleration by formulaically combining the first and second accelerations measured.

2. A method as claimed in Claim 1 , further comprising:
comparing the estimate of change of acceleration with a predetermined threshold value to detect motion of the wheel.

3. A method as claimed in Claim 1 or Claim 2, wherein
the first and second acceleration sensors are operably coupled to an acceleration measurement circuit having a power conservation mode; the method further comprising:
placing the acceleration measurement circuit in the power conservation mode during the predetermined period of time.

4. A method as claimed in Claim 3, further comprising:
waking the acceleration measurement circuit from the power conservation mode at the end of the predetermined period of time to perform the second acceleration measurements.

5. A method as claimed in any one of the preceding claims, wherein formulaic combination of the first and second accelerations measured comprises:
calculating a first absolute value of a first mathematical difference of the accelerations measured in respect of the first measurement axis and a second absolute value of a second mathematical difference of the accelerations measured in respect of the second measurement axis.

6. A method as claimed in Claim 5, wherein the formulaic combination of the first and second accelerations further comprises:
selecting a maximum value from the first and second absolute values.

7. A method as claimed in Claim 6, wherein the formulaic combination of the first and second accelerations is:

$$\text{MAX} \left( |a_x[t=1]-a_x[t=0]| , |a_z[t=1]-a_z[t=0]| \right)$$

where $a_x[t=0]$ and $a_x[t=1]$ are the acceleration measurements of the first acceleration sensor at respective time indicators $t=0$ and $t=1$ separated by the predetermined period of time, and $a_z[t=0]$ and $a_z[t=1]$ are the acceleration measurements of the second acceleration sensor at the respective time indicators $t=0$ and $t=1$.

8. A method as claimed in Claim 5, wherein the formulaic combination of the first and second accelerations comprises:
summing the first and second absolute values.

9. A method as claimed in Claim 8, wherein the formulaic combination of the first and second accelerations is:

$$\sum \left( |a_x[t=1]-a_x[t=0]| , |a_z[t=1]-a_z[t=0]| \right)$$

where $a_x[t=0]$ and $a_x[t=1]$ are the acceleration measurements of the first acceleration sensor at respective time indicators $t=0$ and $t=1$ separated by the predetermined period of time, and $a_z[t=0]$ and $a_z[t=1]$ are the acceleration measurements of the second acceleration sensor at the respective time indicators $t=0$ and $t=1$.

10. A method as claimed in Claim 2, further comprising:

using the comparison of the estimate of change of acceleration with the predetermined threshold value to determine that the wheel is stationary;

waiting the predetermined period of time in response to the wheel being determined as stationary;

measuring third accelerations in respect of the first and second measurement axes; and

calculating another estimate of change of acceleration by formulaically combining the second and third accelerations measured.

11. A method as claimed in Claim 10 , further comprising:
comparing the another estimate of change of acceleration with the predetermined threshold value to detect motion of the wheel.

12. A method as claimed in any one of the Claim 2 to 11, further comprising:
calculating the predetermined threshold value using at least one of: a radius of the wheel, a placement position of the first and second acceleration sensors on the wheel, a required detection time and/or a power consumption requirement.

13. A method as claimed in Claim 12, wherein the placement position is on a tire of the wheel or a rim of the wheel.

14. A method as claimed in any one of Claims 2 to 13, further comprising:
generating a trigger signal in response to detection of motion of the wheel.
A pressure of a tyre of the wheel may be measured in response to the trigger signal. The pressure of the tyre can be communicated to a control unit and analysed. The control unit can be configured to generate a driver warning alert in response to the pressure of the tyre being below a predetermined value.

15. A motion measurement apparatus for a wheel, the apparatus comprising:

an acceleration sensor device comprising a first acceleration sensor, a second acceleration sensor and acceleration measurement circuitry operably coupled to the first and second acceleration sensors, the first and second acceleration sensors being configured to measure acceleration in respect of a first measurement axis and a second measurement axis where the second measurement axis is in respect of a tangential direction of the wheel and substantially orthogonal to the first measurement axis in respect of a radial direction of the wheel; wherein
the acceleration measurement circuitry is configured to measure, when in use, first accelerations in respect of the first and second measurement axes;
the acceleration measurement circuitry is configured to wait a predetermined period of time;
the acceleration measurement circuitry is configured to measure second accelerations in respect of the first and second measurement axes; and
the acceleration measurement circuitry is configured to calculate an estimate of change of acceleration by formulaically combining the first and second accelerations measured.

FIG. 1

FIG. 2

FIG. 3

FIG. 4

Start

Sensor initialisation ⟶ 200

Measure $acc\_x_0$ and $acc\_z_0$ ⟶ 202

Enter low power mode and wait predetermined period of time, $\Delta t$ ⟶ 204

Measure $acc\_x_t$, $acc\_z_t$ ⟶ 206

Calculate $\Delta acc\_x$, $\Delta acc\_z$ ⟶ 208

Calculate absolute value of $\Delta acc\_x$ and $\Delta acc\_z$ ⟶ 210

Sum absolute values calculated ⟶ 212

Compare to threshold value ⟶ 214

218

Assign current acceleration measurements to variables used to store previous acceleration measurements

216

Threshold exceeded?

No

Yes

220

Exit loop and perform another action

FIG. 5

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 039 509 A1 (AUTOCHIPS WUHAN CO LTD [CN]) 10 August 2022 (2022-08-10) * paragraph [0012] - paragraph [0056]; figures 1-10 * | 1-15 | INV. B60C23/04 |
| A | CN 110 667 317 A (UNIV CIVIL AVIATION CHINA) 10 January 2020 (2020-01-10) * paragraph [0058] - paragraph [0065]; figures 1-9 * | 1-15 | |
| A | WO 2006/100577 A1 (MELEXIS NV [BE]; LEMAN DIRK [BE]) 28 September 2006 (2006-09-28) * page 12, line 10 - line 16; figures 1-3 * | 1-15 | |

TECHNICAL FIELDS
SEARCHED        (IPC)

B60C

The present search report has been drawn up for all claims

| Place of search | Date of completion of the search | Examiner |
|---|---|---|
| Munich | 20 June 2024 | Billen, Karl |

EPO FORM 1503 03.82 (P04C01)

**EP 4 588 692 A1**

## ANNEX TO THE EUROPEAN SEARCH REPORT
## ON EUROPEAN PATENT APPLICATION NO.

EP 24 15 2607

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2024

| Patent document cited in search report | | Publication date | Patent family member(s) | | Publication date |
|---|---|---|---|---|---|
| EP 4039509 | A1 | 10-08-2022 | CN | 114851784 A | 05-08-2022 |
| | | | EP | 4039509 A1 | 10-08-2022 |
| | | | TW | 202231507 A | 16-08-2022 |
| | | | US | 2022242176 A1 | 04-08-2022 |
| CN 110667317 | A | 10-01-2020 | NONE | | |
| WO 2006100577 | A1 | 28-09-2006 | NONE | | |

EPO FORM P0459

For more details about this annex : see Official Journal of the European Patent Office, No. 12/82

13

**EP 4 588 692 A1**

**Patent documents cited in the description**

- EP 4039509 A
- US 6259999 B
- US 11441924 B